# EUROPEAN PATENT APPLICATION

(11) **EP 2 554 864 A1**
(43) Date of publication of application: **06.02.2013**
(21) Application number: 11762604.4
(22) Date of filing: 18.03.2011
(51) Int. Cl.: F16C 33/62, F16C 33/32, F16C 33/34

(54) **ROLLING BEARING**

(30) Priority: 30.03.2010 JP 2010077982
(71) Applicant: NTN Corporation, Osaka-shi, Osaka 550-0003 (JP)
(72) Inventor: OKADA Takahiro, Iwata-shi Shizuoka 438-0037 (JP); MINENO Katsunori, Iwata-shi Shizuoka 438-0037 (JP)
(74) Representative: Grünecker, Kinkeldey, Stockmair & Schwanhäusser
(86) International application number: PCT/JP2011/056585
(87) International publication number: WO 2011/122371

(57) **Abstract**

A rolling bearing is disclosed of which the lifespan is increased by reducing brittle flaking and impression-induced flaking on the raceways of inner and outer races and the rolling elements. Steel containing 1.80-1.89% by weight of chrome (brittle flaking-resistant steel) is subjected to carbonitriding and then to hardening and tempering. The chrome reduces generation of white layers which are aggregates of carbon, thus reducing brittle flaking on e.g. the raceways (1a, 4a) due to the white layers. A residual austenite region (5) that forms when the steel is hardened and tempered increases toughness of the steel surface, thus reducing impression-induced flaking due to foreign matter such as wear dust. By reducing both brittle flaking and impression-induced flaking, it is possible to extend the lifespan of the bearing, and reduce maintenance cost such as the cost for changing lubricating oil.

## Description

### TECHNICAL FIELD

This invention relates to a rolling bearing used in e.g. automotive parts including a transmission which are less likely to suffer brittle flaking on the raceways of the inner and outer races and on the surfaces of the rolling elements, and flaking starting from impressions due to foreign matter in lubricating oil.

### BACKGROUND ART

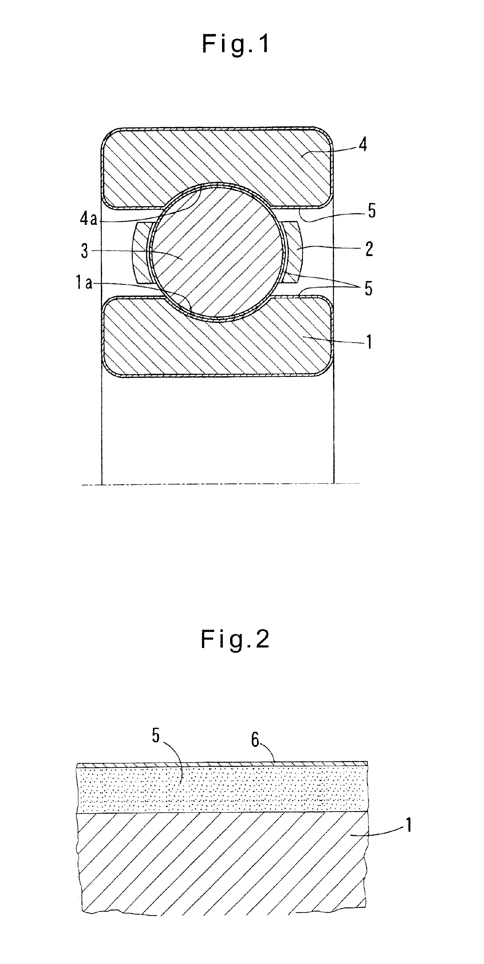

As shown in Fig. 1, which shows an embodiment of the present invention, a rolling bearing is assembled by fitting a retainer 2 around an inner race 1, rolling elements 3 comprising steel balls are fitted in the retainer 2, and an outer race 4 is mounted such that the inner race 1 and the outer race 4 rotate smoothly relative to each other about the axis. The inner and outer races 1 and 4 and the rolling elements 3 are lubricated by lubricating oil. The lubricating oil is clean at the beginning of use of the bearing. But with use of the bearing, wear dust originating from component parts surrounding the bearing, such as gears, gradually mixes into the lubricating oil. Such wear dust tends to become wedged between the raceways 1a and 4a of the respective inner and outer races 1 and 4 and the rolling elements 3, thus promoting wear of the raceways 1a and 4a and the rolling elements 3, and shortening the lifespan of the bearing.

One of the causes of flaking on e.g. the raceways 1a and 4a of a bearing due to wear dust is the existence of structures in the steel which are high-concentration aggregates of carbon and which appear white under a microscope (these structures are hereinafter referred to as "white layers"). Such white layers are extremely high in hardness and brittle compared to the parent phase. Cracks tend to develop in the parent phase starting from the white layers. When these cracks extend and connect together, flaking (brittle flaking) occurs. In order to reduce such brittle flaking, Patent document 1 proposes to use bearing steel containing 2.0 to 5.0% by weight of chrome to reduce the dispersing speed of carbon in the steel, thereby preventing formation of white layers.

Patent document 1 explains that the chrome content should be within the above range because if the chrome content is below this range, it is impossible to effectively reduce the dispersion of carbon, and if over this range, workability of steel deteriorates.

Patent document 2 discloses a bearing made of bearing steel containing 0.2 to 1.2% by weight of chrome, and subjected to carbonitriding treatment and hardening and tempering. The carbonitriding treatment is carried out in an atmosphere (vapor phase or liquid phase) containing carbon and nitrogen to introduce carbon and nitrogen into the surface layer. If the carbonitriding treatment is carried out in a vapor phase atmosphere, such a vapor phase atmosphere ordinarily comprises a reducing gas mixture whose major components are e.g. carbon monoxide and hydrogen, with ammonium further added.

By subjecting the steel to the above-described carbonitriding treatment, the nitrogen content in the surface layer increases, so that the martensitic transformation temperature (Ms point) decreases. This results in, after hardening, a higher content of untransformed austenite (residual austenite) in the surface layer than in the inner portion of the steel (where the nitrogen content is relatively low). Residual austenite, which is higher in toughness than martensite, reduces impressions on the raceways of the inner and outer races even when wear dust mixed in lubricating oil becomes wedged between the raceways of the inner and outer races and the rolling elements, thereby reducing flaking resulting from impressions (hereinafter referred to as "impression-induced flaking").

Patent document 2 explains that the chrome content is determined within the above range because if the chrome content is lower than this range, the hardness of the surface layer is insufficient, and if higher than this range, carbides tend to grow to such an extent as to become starting points of flaking.

### PRIOR ART DOCUMENTS

### PATENT DOCUMENTS

Patent document 1: JP Patent 2883460
Patent document 2: JP Patent Publication 7-190072A

### SUMMARY OF THE INVENTION

### OBJECT OF THE INVENTION

In order to effectively increase the lifespan of a bearing, it is necessary to reduce both brittle flaking resulting from the above-described white layers and impression-induced flaking. But since the range of the chrome content which is effective to reduce brittle flaking (2.0-5.0%) does not overlap with the range of the chrome content which is effective to reduce impression-induced flaking (0.2-1.2%), it has been considered that it is impossible to reduce both of the above two types of flaking. It has therefore been considered that it would be difficult to sufficiently improve the fatigue life of bearings because either brittle flaking or impression-induced flaking cannot be sufficiently reduced.

An object of the present invention is to reduce brittle flaking and impression-induced flaking on the raceways of the inner and outer races, and on the rolling elements, of a bearing, thus improving the lifespan of the bearing.

### MEANS FOR ACHIEVING THE OBJECT

In order to achieve this object, the present invention provides a rolling bearing made of steel containing chrome by more than 1.6% by weight and less than 2.0% by weight and subjected to carbonitriding treatment and then hardening and sintering, wherein the rolling bearing has a surface layer forming a residual austenite region in which the residual austenite content is higher than in an inner portion thereof.

After the carbonitriding treatment, carbon and nitrogen are present in high concentration near the surface of the steel. The carbon near the surface increases sintering properties of the steel, and also increases its surface hardness. On the other hand, nitrogen reduces the Ms point, thus increasing the residual austenite content after hardening. Thus the carbon and nitrogen near the surface impart toughness by the residual austenite region while maintaining predetermined hardness at the surface portion of the steel. A highly anti-corrosive dense film of chrome oxide forms on the surface of the steel. The film further stabilizes the surface condition.

By adjusting the chrome content within the above range, both brittle flaking and impression-induced flaking decrease, thus reliably increasing the lifespan of the bearing.

While the above-mentioned chrome content range is lower than the chrome content range of 2.0-5.0%, which is used in Patent document 1 as being effective in reducing brittle flaking, it is still possible to reduce brittle flaking by increasing the carbon and nitrogen contents in the surface portion by carrying out carbonitriding treatment. Although not known exactly why, it is possible that nitrogen injected into the steel by the carbonitriding treatment may serve to reduce brittle flaking (progression of cracks) by forming compressive stress fields in the surface portion.

On the other hand, the above-mentioned chrome content range is higher than the chrome content range of 0.2-1.2%, which is used in Patent document 2 as being effective in reducing impression-induced flaking. But even with this chrome content range, it is possible to avoid coarsening of carbides as mentioned in Patent document 2 by suitably adjusting the carbon content and/or the carbonitriding conditions, thus avoiding problems resulting from carbides.

In this arrangement, the chrome content in the steel is preferably 1.80% or over and 1.89% or less.
Within this range, it is possible to maximally reduce both brittle flaking due to coagulation of carbides and impression-induced flaking.

In this arrangement, the residual austenite content in the residual austenite region is preferably 10 to 50% by volume relative to the parent phase.
If this residual austenite content is lower than the above range, toughness of the raceways and the surfaces of the rolling elements tends to be insufficient, thus making it difficult to sufficiently reduce impression-induced flaking. If over the above range, the wear resistance tends to be insufficient, thus reducing, rather than increasing, the lifespan of the bearing.

Preferably, in this arrangement, the residual austenite region extends from the surface to a depth of 1 mm.
If the region of the residual austenite, which increases the toughness at the surface portion, is too shallow, the toughness of the surface portion tends to be insufficient. By providing this region so as to extend to the depth of 1 mm, it is possible to sufficiently increase toughness, and thus to effectively reduce impression-induced flaking even if lubricating oil contains wear dust.

The carbonitriding treatment is carried out in an atmosphere comprising, as major components, 18-25% by volume of carbon monoxide, 28-50% by volume of hydrogen, and 5-10% by volume of ammonium, which are known as RX gasses, plus 5-10% by volume of ammonium, together with hardening and tempering. Ordinarily, the hardening is carried out from a temperature of 830-860°C. The tempering is performed at 180°C or lower. By performing the carbonitriding treatment under these conditions, suitable amounts of carbon and nitrogen are introduced into the steel through its surface, thus forming the residual austenite region, which is necessary to reduce impression-induced flaking.

The rolling bearing according to the present invention may be any of a deep groove ball bearing, an angular ball bearing, a double row angular ball bearing, a tapered roller bearing, a double row tapered roller bearing, a cylindrical roller bearing, and a double row cylindrical roller bearing.

The rolling bearing according to this invention may be used in any of a transmission, a pulley, an alternator, an electromagnetic clutch, and a wheel, all for an automobile.
These power transmission parts in automobiles are frequently used in harsh environments where these parts are vibrated and/or exposed to high temperature. In such environments, the raceways of the inner and outer races and the surfaces of the rolling elements tend to suffer from brittle flaking, and also tend to suffer from continuous impression-induced flaking due to wear dust mixed in lubricating oil. By subjecting the steel surface to the above-described treatments, it is possible to effectively reduce such brittle flaking and impression-induced flaking, which in turn ensures stable relative rotation of the bearing over a long period of time.

### ADVANTAGES OF THE INVENTION

According to the present invention, steel forming a bearing contains chrome, and the steel is subjected carbonitriding treatment and hardening and tempering treatment. This reduces brittle flaking. Also, the residual austenite region increases toughness, thereby reducing impression-induced flaking. The lifespan of the bearing thus improves. It is also possible to reduce maintenance costs such as the cost for changing lubricating oil.

### BRIEF DESCRIPTION OF THE DRAWINGS

Fig. 1 is a sectional side view of a rolling bearing embodying the present invention.
Fig. 2 is an enlarged sectional view of a surface of an inner race.

### DESCRIPTION OF THE NUMERALS

### 1. Inner race

1a. Raceway (of the inner race)
2. Retainer
3. Rolling element (steel balls)
4. Outer race
4a. Raceway (of the outer race)
5. Residual austenite region
6. Chrome oxide film

### BEST MODE FOR EMBODYING THE INVENTION

Fig. 1 shows a rolling bearing embodying the present invention, which is a deep groove ball bearing comprising an inner race 1, an outer race 4, and a plurality of steel balls 3 mounted between the inner and outer races 1 and 4. The steel balls 3 are retained by a retainer 2. The inner and outer races 1 and 4 and the steel balls 3 are made of bearing steel containing chrome by over 1.6% by weight and less than 2.0% by weight.

The inner and outer races 1 and 4 have raceways 1a and 4a, respectively, which are subjected to carbonitriding. The surfaces of the steel balls 3 are also subjected to carbonitriding. The carbonitriding treatment is carried out in an atmosphere comprising 18-25% by volume of carbon monoxide, 28-50% by volume of hydrogen, and 5-10% by volume of ammonium, together with hardening and tempering. The hardening is performed from a temperature of 830 to 860°C, and the tempering is performed at 180°C or less.

Fig. 2 schematically shows a section of a portion of the inner ring 1 near the surface after hardening and tempering. No "white layer", as described in the "BACKGROUND ART" section of the specification, is observed in the surface layer of any of the members made of the steel treated in the above manner. This is because the extra amount of chrome added to the steel serves to reduce the degree of dispersion of carbon, thus making aggregation of carbon, which can cause white layers, more difficult. Since white layers can cause brittle flaking, by reducing white layers, it is possible to reduce brittle flaking.

From the surface to at least the depth of 1mm, of such a steel member, a residual austenite region 5 forms of which the residual austenite content is higher than the inner portion thereof. The residual austenite region 5 increases the toughness of the surface of the steel member, thus preventing flaking of the steel surface due to impressions on the surface caused by any foreign matter in lubricating oil, such as abrasion dust. The residual austenite content of the residual austenite region 5 is preferably 10 to 30%. A chrome oxide film 6 is formed on the surface of the residual austenite region 5. The chrome oxide film 6 further improves corrosion resistance of the steel member.

The rolling bearing according to the present invention may be any of an angular ball bearing, double row angular ball bearing, tapered roller bearing, double row tapered roller bearing, cylindrical roller bearing, and double row cylindrical roller bearing. The roller bearing according to the present invention can be used in or on a transmission, pulley, alternator, electromagnetic clutch or wheel, of a motor vehicle. The bearing according to the present invention is less likely to suffer brittle flaking or flaking due to impressions even when used in a harsh environment where the bearing is vibrated at high temperature, and thus is especially suitable for use in or on elements of a power train in a motor vehicle, such as those listed above, which are used in such a harsh environment.

### (Example 1)

A deep groove ball bearing of the type shown in Fig. 1 was formed from the bearing steel according to the present invention (which is hereinafter referred to as "brittle flaking-resistant steel"), and subjected to an endurance test. The brittle flaking-resistant steel contains 1.80 to 1.89% by weight of chrome and is subjected to carbonitriding of the above-described type to form the residual austenite region 5 near the surface.

In the endurance test, to reproduce the environment where a bearing is actually used in a continuously variable transmission, using oil for continuously variable transmissions (CVTF) containing 0.15 grams of steel dust per liter of the oil as foreign matter, the inner race was rotated at 2600 rpm with a radial load of 8300 N (and zero axial load) applied to the bearing, and the bearing misalignment set at 2/1000 rad.

Table 1 shows the results of the endurance test. During the test, when the bearing was operated for about 100 to 240 hours, flaking was observed on the raceway of at least one of the inner and outer races. The time until the cumulative damage probability reaches 10% (hereinafter referred to as "L₁₀ life"), as calculated based on the Weibull distribution, was 90.7 hours. No clear relationship was confirmed between the outer race temperature and the life of the bearing.

**Table 1**

| Bearing specs | Operating time (hours) | Outer race temp. (°C) | Internal state |
|---|---|---|---|
| Brittle flaking-resistant steel (chrome content: 1.80 to 1.89%) + carbonitriding treatment | 234.2 | 115.2 | Flaking both on inner and outer races |
| | 139.8 | 118.4 | Flaking on inner race |
| | 102.5 | 117.0 | Flaking on inner race |
| | 150.8 | 116.1 | Flaking on inner race |
| | 178.0 | 118.0 | Flaking both on inner and outer races |
| | 120.9 | 115.6 | Flaking on inner race |

### (Comparative Example 1)

SUJ2 steel shown in Table 1 of JIS G4805 (high-carbon chrome bearing steel) was subjected to hardening and tempering under the same conditions as described in Example 1, and a deep groove ball bearing of the type shown in Fig. 1 was formed from this steel. This bearing was subjected to the same endurance test conducted in Example 1.

Table 2 shows the results of this endurance test. During the test, when the bearing was operated for about 20 to 110 hours, flaking was observed on one of the inner and outer races. As calculated based on the Weibull distribution, the L₁₀ life was 22.3 hours, and the time until the cumulative damage probability reaches 50% (hereinafter referred to as "L₅₀ life") was 64.9 hours. The Weibull slope was 1.76. From the test results for Example 1 and Comparative Example 1, it is apparent that by subjecting the above-described brittle flaking-resistant steel to the above-described predetermined carbonitriding as well as hardening and tempering, thereby forming the residual austenite region 5 on the surface, the durability and reliability of the bearing significantly improves. As in Example 1, no clear relationship was discovered between the outer race temperature and the life of the bearing.

**Table 2**

| Bearing specs | Operating time (hours) | Outer race temp. (°C) | Internal state |
|---|---|---|---|
| SUJ2 steel + hardening and tempering | 22.0 | 116.0 | Flaking on outer race |
| | 109.2 | 114.9 | Flaking on inner race |
| | 41.9 | 121.1 | Flaking on inner race |
| | 93.8 | 119.5 | Flaking on inner race |
| | 84.8 | 115.9 | Flaking on inner race |
| | 77.2 | 117.2 | Flaking on inner race |

### (Comparative Example 2)

The above-mentioned SUJ2 steel was subjected to the same carbonitriding treatment as used in Example 1, and a deep groove ball bearing of the type shown in Fig. 1 was formed from this steel. This bearing was subjected to the same endurance test conducted in Example 1.

Table 3 shows the results of this endurance test. As calculated based on the Weibull distribution, the L₁₀ life was 67.7 hours, and the "L₅₀ life was 116.7 hours. The Weibull slope was 3.46. From the test results for Comparative Examples 1 and 2, it is apparent that by subjecting the steel to carbonitriding treatment and then to hardening and tempering, thereby forming the residual austenite region 5 on the surface, the durability of the bearing significantly improves. As in Example 1, no clear relationship was discovered between the outer race temperature and the life of the bearing.

The test results for Example 1 (Table 1) and Comparative Example 2 (Table 3) clearly show that a bearing formed by subjecting the brittle flaking-resistant steel to carbonitriding is far more durable than a bearing formed by subjecting SUJ2 steel to the same carbonitriding. This is presumably because the extra amount of chrome in the brittle flaking-resistant steel reduces production of white layers as mentioned above, thereby reducing the possibility of brittle flaking.

**Table 3**

| Bearing specs | Operating time (hours) |
|---|---|
| SUJ2 steel + carbonitriding treatment | 168.3 |
| | 128.4 |
| | 96.3 |
| | 77.3 |
| | 89.7 |
| | 138.6 |

### (Comparative Example 3)

Deep groove ball bearings of the type shown in Fig. 1 were prepared, of which the inner and outer races and the balls are made of the above-described SUJ2 and/or the above-described brittle flaking-resistant steel, which contains an extra amount of chrome. These deep groove ball bearings were hardened and tempered in the same manner as in Example 1, and then subjected to an endurance test. In this endurance test, with grease sealed, and with a radial load of 3240 N (and zero axial load) applied, each bearing was operated by repeating a cycle of 15 seconds consisting of acceleration from zero rpm to 18000 rpm in one second, constant speed operation at 18000 rpm for 10 seconds, deceleration to zero rpm in one second, and standstill for 3 seconds.

Table 4 shows the results of this endurance test, which continued for 1000 hours without intermission. For bearings which became inoperative due e.g. to damage thereto, their actual operating times are shown in Table 4.

For four of the above bearings of which the inner and outer races and the balls are all made of the SUJ2 steel, only one became inoperative due to damage thereto before the 1000-hour period had been reached. Two of the above bearings of which the inner race and the balls are made of the SUJ2 and the outer race is made of the brittle flaking-resistant steel both became inoperative due to damage thereto before the end of the 1000-hour period. Two of the above bearings of which the inner and outer races are made of the brittle flaking-resistant steel and the balls are made of the SUJ2 steel remained undamaged and thus operative at the end of the 1000-hour period. These results show that no white layers, which are aggregates of carbon, develop in the brittle flaking-resistant steel, which contains an extra amount of chrome, and the member made of this steel is free of brittle flaking resulting from white layers. But no clear correlation was found between the existence of white layers and the operating time. This indicates that in order to improve the durability of the bearing, it is necessary not only to prevent or reduce white layers using the brittle flaking-resistant steel, but also to form the residual austenite region by subjecting the brittle flaking-resistant steel to carbonitriding treatment.

**Table 4**

| Bearing specs | Operating time (hours) | Change in structure |
|---|---|---|
| Inner race: SUJ2 steel Outer race: SUJ2 steel Balls: SUJ2 steel | 1000 | White layers and black layers in outer race |
| | 1000 | None |
| | 632 | White layers and black layers in outer race |
| | 1000 | White layers and black layers in inner race |
| Inner race: SUJ2 steel Outer race: Brittle flaking-resistant steel Balls: SUJ2 steel | 423 | White layers in inner race |
| | 624 | Black needlelike structures in inner ring |
| Inner race: Brittle flaking-resistant steel Inner race: Brittle flaking-resistant steel Balls: SUJ2 steel | 1000 | Black needlelike structures in outer ring |
| | 1000 | None |

## Claims

1. A rolling bearing made of steel containing chrome by more than 1.6% by weight and less than 2.0% by weight and subjected to carbonitriding treatment and then hardening and sintering, wherein the rolling bearing has a surface layer forming a residual austenite region (5) in which the residual austenite content is higher than in an inner portion thereof.

2. The rolling bearing of claim 1, wherein the chrome content in the steel is 1.80% or over and 1.89% or less.

3. The rolling bearing of claim 1 or 2, wherein the residual austenite content in the residual austenite region (5) is 10 to 50% by volume.

4. The rolling bearing of any of claims 1 to 3, wherein the residual austenite region (5) extends from the surface to a depth of 1 mm.

5. The rolling bearing of any of claims 1 to 4, wherein the carbonitriding treatment is carried out in an atmosphere comprising 18-25% by volume of carbon monoxide, 28-50% by volume of hydrogen, and 5-10% by volume of ammonium.

6. The rolling bearing of any of claims 1 to 5, which is one of a deep groove ball bearing, an angular ball bearing, a double row angular ball bearing, a tapered roller bearing, a double row tapered roller bearing, a cylindrical roller bearing, and a double row cylindrical roller bearing.

7. The rolling bearing of claim 6, which is used in one of a transmission, a pulley, an alternator, an electromagnetic clutch, and a wheel, all for an automobile.
